# EUROPEAN PATENT APPLICATION

(11) **EP 2 474 914 A1**
(43) Date of publication of application: **11.07.2012**
(21) Application number: 12150353.6
(22) Date of filing: 06.01.2012
(51) Int. Cl.: G06F 13/40, G06F 13/42

(54) **Computer system and method for signal transmitting**

(30) Priority: 11.01.2011 JP 2011002647
(71) Applicant: Hitachi Ltd., Tokyo (JP)
(72) Inventor: Yamauchi, Tatsuya, Tokyo 100-8220 (JP); Kobayashi, Masahiro, Tokyo 100-8220 (JP); Yamagata, Ryo, Tokyo 100-8220 (JP); Tamura, Takashi, Tokyo 100-8220 (JP); Watanabe, Kenichi, Tokyo 100-8220 (JP)
(74) Representative: Calderbank, Thomas Roger

(57) **Abstract**

In order to suppress occurrence of a random pattern signal is suppressed without the use of a sideband signal in a long distance data transmission exceeding that defined in a PCIe interface specification, provided is a computer system, including a first component (110) having a transmitting unit which transmits a control signal, a second component (130) having a receiving unit which receives the control signal, a transmission path which connects the first component (110) and the second component (130) along which a signal is transmitted and received, wherein: in case of the transmitting unit of the first component transmits a ternary signal with three states of 0/1/Idle to the receiving unit of the second component, the transmitting unit of the first component substitutes a combination of signals representing 0/1 for a signal representing the Idle state, and transmits the substituted signals instead of the ternary signal to the receiving unit of the second component.

## Description

The present invention relates to a computer system having a PCI Express interface and signal transmitting method. More particularly, the present invention relates to both a computer system in which transmission distance of the PCI Express interface can be made extendable and a signal transmitting method therefor.

Conventionally, in the computer system, a Peripheral Component Interconnect Express (PCIe) has been widely employed (such as shown in PCI Express Base Specification Revision 2.0 (chapter 1 and chapter 4)). In the PCIe, the number of I/O devices connectable to a processing module can be increased by disposing a switch within the construction. Also in a Multi-Root I/O Virtualization (MR-IOV), which is an extended specification for the PCIe, a plurality of such processing modules can share the common I/P device through the intermediary of a MR-IOV-compliant switch. In order to extend the I/O device in a processing module which structurally limits the number of I/O ports to be mounted, such as a blade type server module among others, a structure is commonly used, in which a device (I/O module) capable of mounting a plurality of I/O devices thereon is disposed separately from the processing module, and a cable connects between the processing module and the I/O module.

In the conventional PCI Express Base Specification 2.0, communication rate is 2.5 Gps or 5 Gbps. In contract, it is decided that "PCI Express Base Specification Revision 3.0 defines 8 Gbps, which achieves a faster communication rate, in addition to 2.5 Gbps and 5 Gbps rate. However, the transmission of electrical signals using a wiring or a cable on a printed board has a problem that transmission distance is limited, because signal attenuation rate increases as signal frequency increases due to a so-called skin effect. Therefore, the signal attenuation rate increases greatly in communication at 8 Gbps compared with the communication at 2.5 Gps or 5 Gps, thus the transmission distance being more strictly limited.

To cope with the problem, a method as described in JP-A- 2001-285312 has been widely being used. In the method, a relay buffer for waveform compensation, such as a redriver or an equalizer, is mounted on an interface, and the relay buffer recovers the attenuated waveform. There has been also another method, as described in JP-A-2000-105642, that uses an optical cable, an electrical/optical conversion device and an optical/electrical conversion device to convert an electric signal into an optical signal, and to transmit the signal over the optical cable that attenuates the signal less than attenuation within an electrical cable.

Furthermore, when the relay buffer is used to compensate the waveform, there occurs a random pattern signal caused by an Electrical Idle (EI) state that exists in the PCIe interface. Therefore, as described in JP-A-2009-282798, there is a method of suppressing the occurrence of the random pattern signal by means of a sideband signal.

What needs to be considered when compensating the waveform with the relay buffer mounted on the PCIe interface is that there is the Electrical Idle (EI) state existed in the PCIe interface specification. The Electrical Idle (EI) state in the PCIe specification shows an electrical power saving operation, as a state without a communication in which an electrical potential difference between a positive pole and a negative pole of a differential signal is 0 volts and remains constant.

However, even if the electrical potential difference in the EI state is represented by 0 volts, the electrical potential difference of the differential signal does not actually become 0 volts due to noise of components or the like within the device. Therefore, the PCIe specification defines a threshold value for the EI state (up to 175mV, refer to "PCI Express Base Specification Revision 2.0", 4.2.4.2. Electrical Idle Sequences p.181-182, 4.2.4.3. Inferring Electrical Idle p.183-184, 4.3.3.5. Transmitter Specification p.247-250, 4.3.4.4. Receiver Specifications p.265-267, 4.3.5.5. Electrical Idle p.274), and also defines that a signal lower than the threshold value is to be detected as the EI state.

The relay buffer having been inserted into the PCIe interface determines the EI state based on the amplitude of an inputted signal, and filters signals below the set threshold value as noise.

If the length of the wiring is longer than that defined in the PCIe interface specification due to board design constraint or the like, an input signal of the PCIe interface which has been inputted to the relay buffer of the PCIe interface is greatly attenuated and sometimes falls below the threshold value set to the relay buffer, resulting in a normal signal being filtered as noise.

On the other hand , when the relay buffer does not perform filtering and amplifies the whole inputted signals, the relay buffer amplifies even the noise. As a result, it can not be discriminated between a signal when the PCIe interface is in a normal operation state and noise when the PCIe interface is in an EI state, and an irregular pattern signal could be amplified and outputted.

The occurrence of the random pattern signal can be inhibited by setting a threshold value lower than that defined in the PCIe interface specification to the relay buffer. However, typically, since commercially available relay buffers are set with the threshold value defined in the PCIe interface specification, it then becomes impossible to use the commercially available components, requiring the development of parts. It then also becomes necessary to make development cost for a device undesirably increased. Furthermore, even if the threshold value of the relay buffer is lowered, it may be impossible to discriminate between the noise at the EI state of the PCIe interface and the normal signal at the normal operation state due to variations of manufacturing conditions of LSI, and output could be cut during the normal operation state.

In the LSI that received the random pattern signal, an internal logic circuit likely causes an unexpected operation, when it receives an input that has not been defined by the PCIe interface specification. In the case of conventional single route connection, if an I/O device works erroneously, the trouble has an impact only on the interior of a PCI tree that constitutes a PCI device connected to a processing module. However, in the case of a multiple connection in which a plurality of processing modules share the I/O device via a switch, if the PCIe switch malfunctions, each PCI tree connected is influenced, and an operation of the entire system may be suspended.

In a conventional system, in order to discriminate between a normal signal and noise occurring in the EI state, the receipt of the random pattern signals was avoided by the following: judging whether a transmission side relay buffer is in the IE state or not, transferring the information on the judgment to a receiving side relay buffer using the side band signal; and causing the receiving side relay buffer to on/off control the information from the PCIe interface based on the transferred judgment information. In this case, it was necessary to provide a relay buffer controlling interface apart from the PCIe interface.

The EI state also raises another problem when an optical cable is used for PCIe communications. In a differential signal used by PCIe, 1/0 of data is determined by simultaneously sending a pair of antiphase signals to two signal wires and causing a receiving side device to measure the electrical potential difference. For example, the data at the time when the electrical potential difference between the P pole and N pole is positive is defined as 1, and the data at the time when the electrical potential difference between the P pole and N pole is negative is defined as 0. However, a state in which the electrical potential difference becomes 0 volts is a third state in which the electrical potential difference is neither positive nor negative. Typically, in optical communications, 1/0 of data is represented by ON/OFF of light and only two states can be represented. As a result, it is impossible to transmit the EI state, which is one of the three states represented by the electrical potential difference, over a general optical cable.

In the PCIe interface specification, in addition to an electrical power saving operation state in which communication is not performed, the EI state is used during transition to a Dx state and during link training sequence. Since it is necessary to go through the link training or Dx state during initialization or resetting of a PCIe bus,or during power-on/off, the EI state cannot be transmitted. At that time, it is not likely to be checked in a normal manner if the PCIe bus is available for communication.

In the case of turning into the EI state in the PCIe communication that uses the optical cable, the electrical potential difference of the differential signal changes between positive and negative near 0 volts. Such electrical potential difference may be detected as 1/0 of data, resulting in the possibility that irregular pattern signals will be outputted.

It is a preferred aim of the present invention to provide a signal transmission method capable of solving the above mentioned problems and suppressing the occurrence of random pattern signals. The present invention describes the PCIe, which is widely employed as described above, as an example. However, it should be noted that the present invention is not limited thereto. The application of the present invention to the PCIe specification would enable the long-distance data transmission beyond that defined in the PCIe interface specification without the use of a sideband signal.

The computer system and signal transmission method according to the present invention is **characterized in that** the system includes a first component having a transmitting unit which transmits a control signal, a second component having a receiving unit which receives the control signal, a transmission path which connects the first component and the second component along which a signal is transmitted and received, wherein: in case of the transmitting unit of the first component transmits a ternary signal with three states of 0/1/Idle to the receiving unit of the second component, the transmitting unit of the first component substitutes a combination of signals representing 0/1 for a signal representing the Idle state, and transmits the substituted signals instead of the ternary signal to the receiving unit of the second component.

More particularly, the computer system and signal transmission method according to the present invention is **characterized in that** the system includes: when the first component transits to the Electrical Idle (EI) state, the transmitting unit of the first component transmits an Electrical Idle Ordered Set (EIOS) signal to the receiving unit of the second component, and continues to transmit the EI substituted signal to the receiving unit of the second component.

When the relay buffer is used to transmit a signal for a long distance out of the PCIe specification, the substitute signal is transmitted without turning into the EI state, thus making it possible to inhibit the occurrence of the random pattern signal and prevent erroneous operation of the PCIe component.

Other objects, features and advantages of the invention will become apparent from the following description of the embodiments of the invention taken in conjunction with the accompanying drawings.

In the drawings
Fig. 1 is a block diagram showing a computer system according to Embodiment 1;
Fig. 2 is a block diagram showing a connection structure between two PCIe components;
Fig. 3 is a block diagram showing an example of a structure of a physical layer of a PCIe port;
Fig. 4 is the first half of a flowchart describing the operation of the PCIe port in a normal mode;
Fig. 5 is the second half of the flowchart describing the operation of the PCIe port in a normal mode;
Fig. 6 is the first half of a flowchart describing the operation of the PCIe port in a mode in which EI is not used;
Fig. 7 is the second half of the flowchart describing the operation of the PCIe port in a mode in which the EI is not used.
Fig. 8 shows a signal transmitted by a transmitting differential driver of the PCIe port when it is both in the EI state and in an EI substitute state; and
Fig. 9 is a block diagram showing a server device according to Embodiment 2.

Hereinafter, embodiments of the present invention will be described with reference to the accompanied drawings.

### [Embodiment 1]

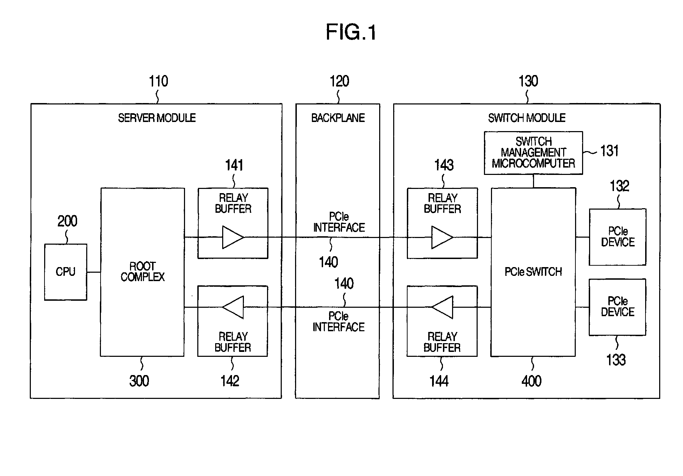

The structure of a computer system according to Embodiment 1 to which the present invention is applied will be described with reference to Fig. 1. The server device includes a server module 110 and a switch module 130, with the server module 110 being connected to the switch module 130 via a backplane 120.

The server module 110 has a CPU 200 and a root complex 300, with the root complex 300 being connected to a PCIe switch 400 mounted on the switch module 130 via PCIe interfaces 140. Relay buffers 141, 142 on the server module 110 and relay buffers 143, 144 on the switch module 130 is connected to the PCIe interfaces 140. These relay buffers have an equalizer function and a pre-emphasis function, and compensate waveform of a signal.

The switch module 130 has the PCIe switch 400, a switch management microcomputer 131, and one or more PCIe devices 132, 133. The switch management microcomputer 131 manages setting operations of the PCIe switch 400.

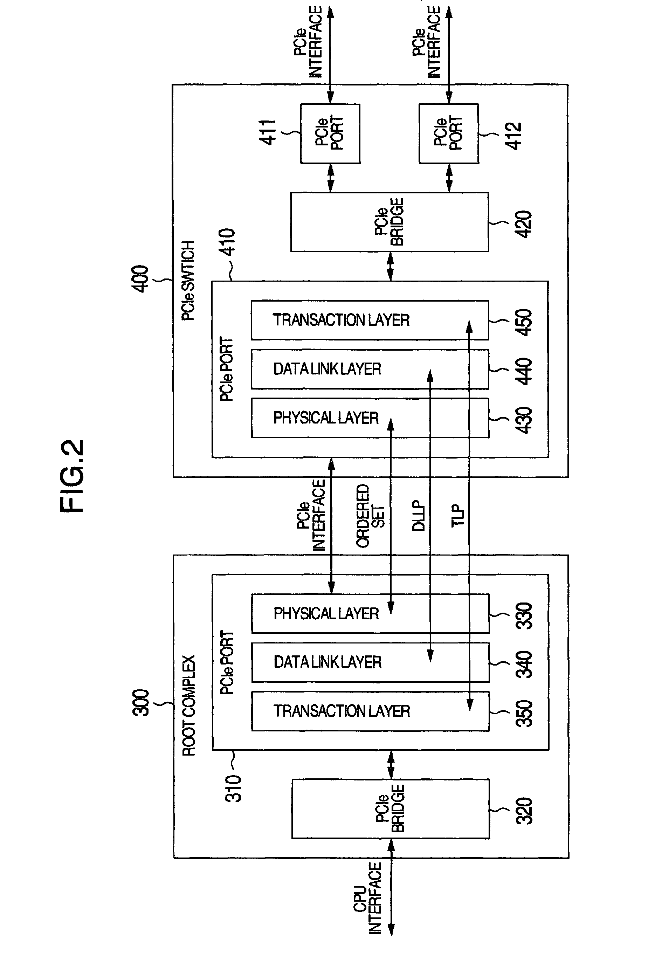

Next, a connection structure between two components compliant with the PCIe specification will be described with reference to Fig. 2. Here, the description is made taking as an example of connection between the root complex 300 and the PCIe switch 400.

The root complex 300 has a PCIe port 310 and a PCIe bridge 320. The PCIe switch 400 has PCIe ports 410, 411, 412 and a PCIe bridge 420. The PCIe bridges 320, 420 relay the communication inside the components. The PCIe ports 310, 410, 411, 412 communicate with PCIe ports outside the components to which they belong.

The architecture of the PCIe ports has a layer structure comprising transaction layers 350, 450, data link layers 340, 440 and physical layers 330, 430. The unit of data signal transmitted and received between each layer is referred to as a "packet".

The transaction layers 350, 450 are arranged to send and to receive data to and from the PCIe bridges 320, 420 and the data link layers 340, 440 after converting the data into the form of "transaction layer packet" (TLP). The exchange of data within the PCIe fabric is s performed in the form of TLP.

The data link layers 340, 440 send the TLP received from the transaction layers 350, 450 to the physical layers 330, 430, and send the TLP received from the physical layers 330, 430 to the transaction layers 350, 450. The data link layers 340, 440 also send and receive a "data link layer packet" (DLLP) to and from destination data link layers for link management. The DLLP is not sent and received between the transaction layers 350, 450 and the data link layers 340, 440.

The physical layers 330, 430 convert the TLP and DLLP received from the data link layers 340, 440 into electrical signals and physically transmit and receive the signals to and from destination physical layers. The physical layers 330, 430 also transmit and receive an "Ordered set" to and from the destination physical layers for link management. The Ordered set is also referred to as a "Physical Layer Packet" (PLP).

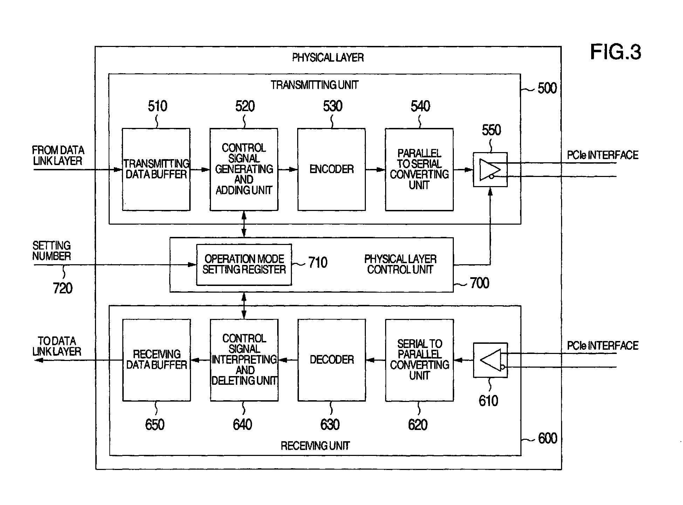

Next, the function of the physical layer 330 will be described with reference to Fig. 3. The physical layer 330 and the physical layer 430 are similarly structured.

The physical layer 330 has a transmitting unit 500, a receiving unit 600 and a physical layer control unit 700. The transmitting unit 500 has a transmitting data buffer 510, a control signal generating and adding unit 520, an encoder 530, a parallel-to-serial conversion unit 540, and a transmitting differential driver 550. The receiving unit 600 has a differential receiver 610, a serial-to-parallel conversion unit 620, a decoder 630, a control signal interpreting and deleting unit 640 and a receiving data buffer 650.

The transmitting data buffer 510 receives a packet (in the form of TLP or DLLP) from the data link layer 340 concurrently with information showing a packet boundary and outputs the packet to the control signal generating and adding unit 520. The transmitting data buffer 510 also has a handshake function for sending and receiving data to and from the data link layer.

After receiving the packet from the transmitting data buffer 510, the control signal generating and adding unit 520 adds a framing character to the heading and the tail of the packet, and outputs such a packet with the frame character so as to cause the receiving side physical layer 430 to recognize the heading and the tail of the packet to the encoder 530.

The control signal generating and adding unit 520 also generates the "Ordered set", which is a communication command peculiar to the physical layer, for the purpose of link management, and outputs "Ordered set" to the encoder 530.

The encoder 530 applies 8b/10b conversion, i.e. 8bits/10bits conversion, or 128b/130b conversion, i.e. 128bits/130bits conversion, to the inputted data, and outputs the converted data to the parallel-to-serial conversion unit 540. The encoder 530 converts an 8-bit character into a 10-bit symbol if the transmission rate of the transmitting differential driver 550 is 2.5 Gbps and 5 Gbps, and converts a 128-bit symbol into a 130-bit block if the transmission rate is 8 Gbps.

The parallel-to-serial conversion unit 540 converts the parallel signal inputted from the encoder 530 into a serial signal and sends the converted signal to the transmitting differential driver 550. The transmitting differential driver 550 outputs the received serial signal as a differential signal. An output control signal is inputted to the transmitting differential driver 550 from the physical layer control unit 700, thus making it possible to turn on/off the output of the transmitting differential driver 550. It then becomes possible to turn ON/OFF the output of the transmitting differential driver 550.

The differential receiver 610 performs clock reproduction from a received differential signal and converts the received differential signal from its analog signal into a serial digital signal.

The serial-to-parallel conversion unit 620 converts the serial signal outputted by the differential receiver 610 into a parallel signal and send the converted signal to the decoder 630.

The decoder 630 applies 8b/10b conversion or 128b/130b conversion to the inputted data and outputs the converted data to the control signal interpreting and deleting unit 640. When the transmission rate of the differential signal is 2.5 Gbps and 5 Gbps, the decoder 630 converts the 10-bit symbol back into the 8-bit character, and when the transmission rate of the differential signal is 8 Gbps, the decoder 630 converts the 130-bit block back into the 128-bit block.

The control signal interpreting and deleting unit 640 deletes a K code, described later, and the "Ordered set" from the inputted signal and sends the packet in the form of TLP and DLLP to the receiving data buffer. The character representing the heading and end of the TLP and DLLP is deleted by the receiving data buffer.

The 8b/10b conversion and 128b/130b conversion have a disadvantage that data transfer efficiency is reduced. However, in such conversions, since each of data "1" or data "0" is not successively outputted, it then becomes possible to reproduce clock from the data signal. In addition, in the 8b/10b conversion and 128b/130b conversion, since there is a lot of flexibility to represent the data, it is then possible to use this flexibility and to define a particular code for controlling. A communication command peculiar to the physical layer using this code is the "Ordered set".

In the 8b/10b conversion, a control code is referred to as the K code and is expressed in the form of Kx. y. In contrast to the K code, ordinary data is referred to as a D code and is expressed in the form of Dx. y.

In the 128b/130b conversion, a row of 130 bits is referred to as a block, which comprises a forefront two-bit sync header showing a kind of block and subsequent sixteen 8-bit symbols. If the sync header is 10, then it shows that the block is an ordinary data signal, and if the sync header is 01, then it shows that the block is an "Ordered set".

Electrical Idle Ordered Set (EIOS) and Electrical Idle Exit Ordered Set (EIEOS) are examples of the Ordered set. When transiting to the EI state, in order to inform the destination of the transition to the EI state, the transmitting unit 500 transmits the EIOS immediately after the transmission of the last data signal and immediately before the transition to the EI state. Upon completion of transmission of the EI state, the transmitting unit 500 transits to the EI state. When resuming a transmission of a data signal, the transmitting unit 500 first transmits the EIEOS in order to inform the destination of the termination of the EI state, and then starts the data transmission.

In the 8b/10b conversion, the EIOS is defined by four K codes, i.e. K28.5, K28.3, K28.3 and K28.3, and in the 128b/130b conversion, the EIOS is defined by a sync header 01 and sixteen 66h (hexadecimal expression. 01100110 in binary expression).

In the 8b/10b conversion, the EIEOS is defined by a set of 16 codes, i.e. one K28.5, fourteen K28.7 and one D10.2. In the 128b/130b conversion, the EIEOS is defined by a form in which the sync header 01 and succeeding sixteen bits symbols are arranged. Each of the sixteen bits are arranged with "1" or "0" data alternately.

In a computer system to which the present invention is applied, when trying to transit to the EI state, the transmitting unit 500 in the physical layer does not actually transit to the EI state. Instead, it transmits to an EL substitute state in which the transmitting unit 500 in the physical layer continues to transmit a newly defined Order set as an EL substitute signal. In other words, the transmitting unit 500 in the physical layer has a mode in which the EI is not used.

The EI substitute signal takes the form of the "Ordered set", and the "Ordered set" that has been already defined in the PCIe specification may be used in addition to one that is not defined yet. However, since the EIEOS for notifying the termination of the EI state is also used as the "Ordered set" for notifying the termination of the EI substitute state, an Ordered set other than the ELEOS should be the EI substitute signal.

Examples of the EI substitute signal include EIOS. When the EIOS is used as an EI substitute signal, a signal that is not defined yet is not used and continuous transmission of EIOS is within the scope of the PCIe specification. Therefore, only a small portion of the PCIe specification has to be changed, thus making it possible to reduce development costs for components.

The physical layer control unit 700 has an operation mode setting register 710 that records a setting of the physical layer 330 based on a setting signal 720. The setting signal 720 is a level signal designated by the CPU 200 via an external interface. If the setting signal 720 is "H", the signal indicates that the physical layer 330 is in a mode in which EI is not used, and if the setting signal 720 is "L", it indicates that the physical layer 330 is in a normal operation mode in which the EI can be used. In addition, the physical layer control unit 700 is arranged to be connected to the control signal generating and adding unit 520, the transmitting differential driver 550 and the control signal interpreting and deleting unit 640, and to switch the control depending on the operation mode. Here, the operation mode setting resister 710 does not need to exist within the physical layer control unit 700. That is, the operation mode setting resister 711 may be outside of the physical layer control unit 700 if there is any way to notify the physical layer control unit 700 of whether the physical layer 330 is in the normal mode or in the mode in which the EI is not used.

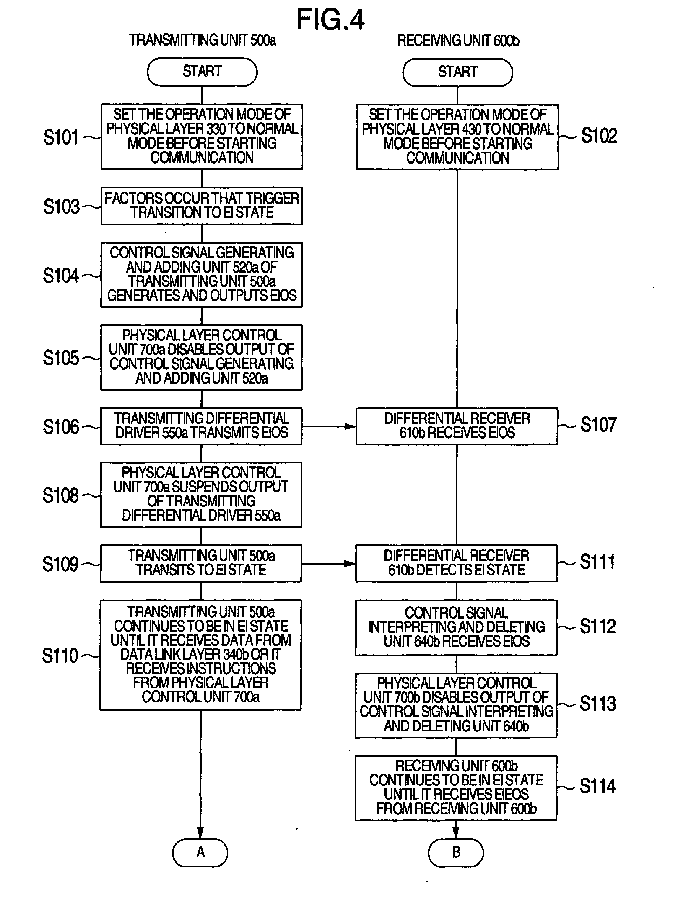

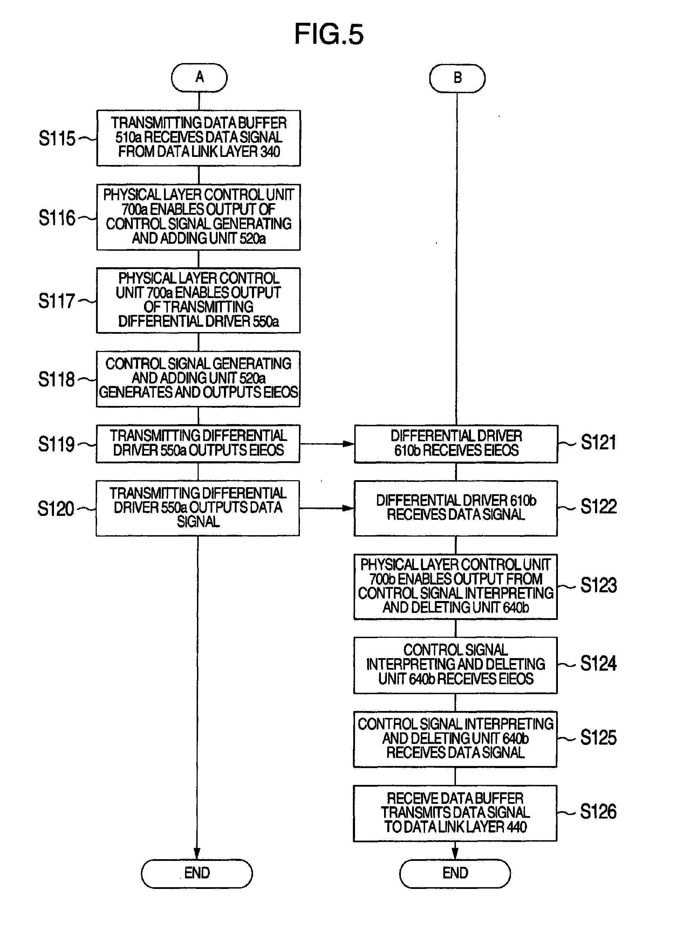

Next, an operation of the EI state in the physical layer 330 which is in the normal mode similar to the conventional one will be described with reference Figs. 4 and 5. A character "a" is put to the symbol related to the physical layer 330, while "b" is put to the symbol related to the physical layer 430.

The CPU 200 records the setting of an operation mode (here, normal mode) of the physical layer 330, which is previously selected via the external interface, on the operation mode setting register 710a (step S101). The switch management microcomputer 131 mounted on the switch module 130 also records, in the same manner, the setting of an operation mode (here, normal mode) of the physical layer 430, which is previously selected via the external interface, on the operation mode setting register 710b (step S102).

If a factor that triggers the transition to the EI state occurs, the control signal generating and adding unit 520a of the transmitting unit 500a generates and outputs EIOS for only a prescribed number of times (steps S103, S104). The factors that trigger the transition to the EI state have been defined in the PCIe specification and include, for example, a case where the PCIe interface does not communicate for a certain period of time, a case where a part of a link training, a case where a PCIe device transits to a D3 state or the like. The number of times to generate and output the EIOS is determined based on the PCIe specification which prescribes one time for the communication at 2.5 Gbps or 8 Gbps, and two times for the communication at 5 Gbps. The prescribed number of times for generating and outputting the EIOS can be increased to enable the receiving unit 600b to reliably receive the EIOS.

The physical layer control unit 700a disables the output succeeding to the last EIOS having been outputted by the control signal generating and adding unit 520a in case that the control signal generating and adding unit 520a finishes outputting the EIOS for the just prescribed number of times (step S105).

The EIOS outputted from the control signal generating and adding unit 520a is sent from the transmitting differential driver 550a via the encoder 530a and parallel-to-serial conversion unit 540a, and such outputted EIOS is received by the differential receiver 610b of the PCIe port 310 (steps S106, S107).

When the transmitting differential driver 550a transmits the EIOS, the physical layer control unit 700a suspends the output of the transmitting differential driver 550a, and the transmitting unit 500a transits to the EI state (steps S108, S109).

The transmitting unit 500a which transited to the EI state continues to be in the EI state until it receives data from the data link layer 340, or receives instructions from the physical layer control unit 700a (step S110).

In the meantime, the differential receiver 610b detects that the transmitting unit 500a has turned into the EI state because there is no output from the transmitting differential driver 550a (step S111).

The EIOS received by the differential receiver 610b is inputted into a control signal interpreting and deleting unit 640b via a serial-to-parallel conversion unit 620b and a decoder 630b.

The control signal interpreting and deleting unit 640b notifies a physical layer controlling unit 700b of reception of such inputted EIOS into the control signal interpreting and deleting unit 640b. Having received the notification, the physical layer controlling unit 700b disables the output of the control signal interpreting and deleting unit 640b. When the output of the control signal interpreting and deleting unit 640b is disabled, it is determined that the receiving unit 600b has completed the transition to the EI state (steps S112, S113).

Thereafter, the receiving unit 600b continues to be in the EI state until it receives EIEOS from the transmitting unit 500b (step S114).

In the transmitting unit 500a which is in the EI state, when a transmitting data buffer 510a receives a data signal from the data link layer 340, the physical layer control unit 700a enables the output of the transmitting differential buffer 550a and starts to recover from the EI state (steps S115, S116, S117).

The control signal generating and adding unit 520a generates and outputs the EIEOS before it transmits the data signal received from the data link layer 340 (step S118).

The transmitting differential driver 550a transmits a data signal towards the differential receiver 610b following the EIEOS (steps S119, S120).

With receiving a differential signal that is not in the EI state, the differential receiver 610b detects that the transmitting unit has recovered from being in the EI state (step S121).

Upon detection that the transmitting unit has recovered from being in the EI state, the physical layer control unit 700b enables the output of the control signal interpreting and deleting unit 640b (step S123).

The control signal interpreting and deleting unit 640b receives data signal following the EIEOS, and outputs the data signal to the receiving data buffer. The receiving data buffer 650b outputs the data signal to the data link layer (steps S124, S125, S126).

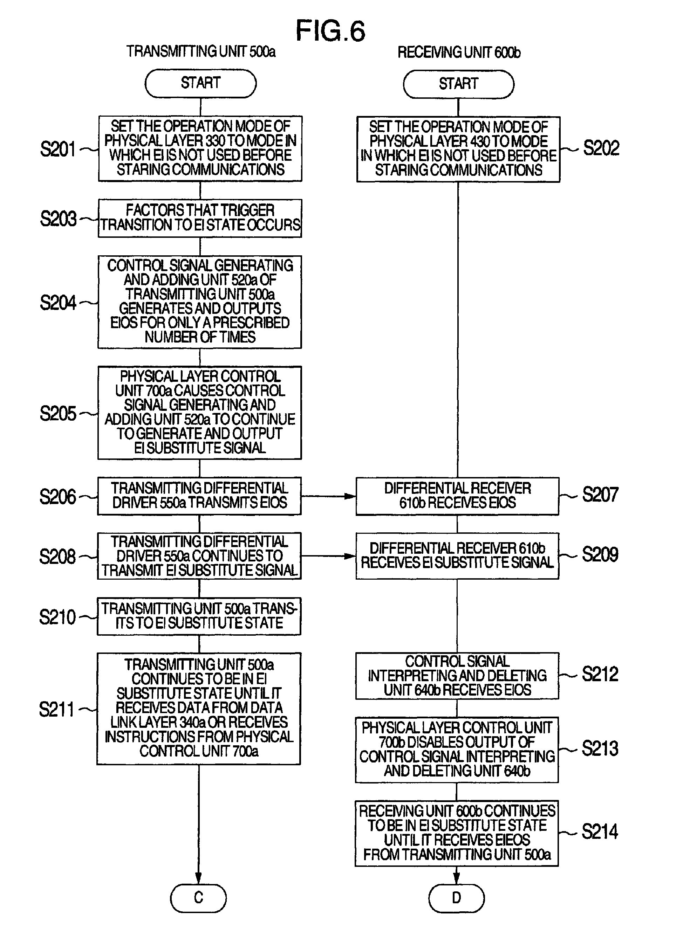

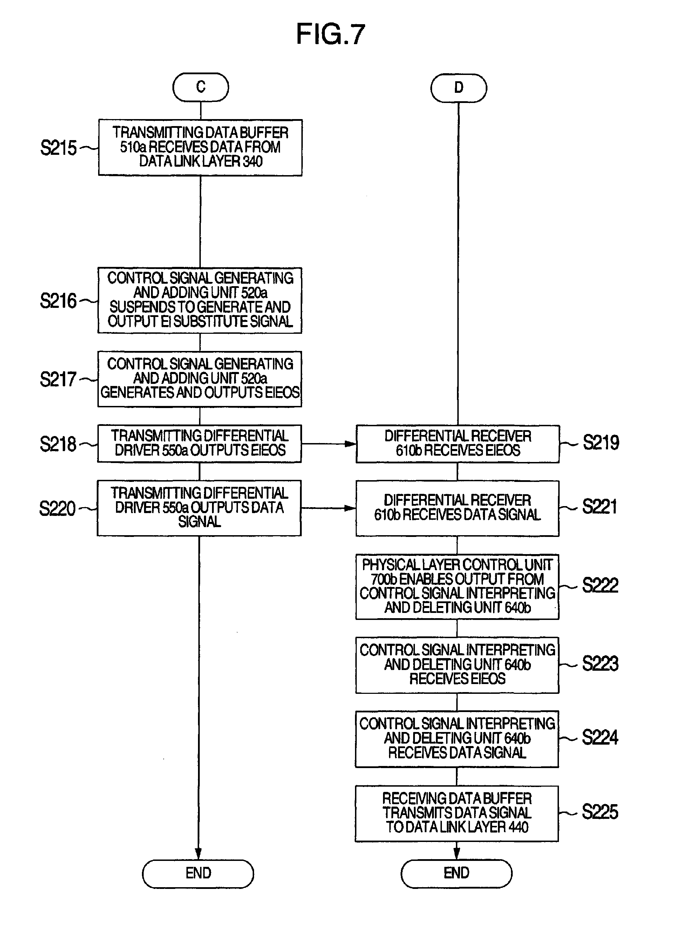

Next, an operation of an EI substitute state in the physical layer 330 in the mode in which the EI is not used will be described with reference to Figs. 6 and 7.

The CPU 200 records the setting of the operation mode (here, mode in which the EI is not used) of the physical layer 330, which is previously selected via the external interface, on the operation mode setting register 710a (step S201).

The switch management microcomputer 131 mounted on the switch module also records the setting of the operation mode (here, EI free mode) of the physical layer 430, which is previously selected via the external interface on the operation mode setting register 720b (step S202).

If the factor that triggers the transition to the EI state occurs, the control signal generating and adding unit 520a of the transmitting unit 500a generates and outputs EIOS only for a prescribed number of times equal to that in the normal mode (steps S203, S204). The factors that trigger the transition to the EI state are the same as those in the normal mode. The prescribed number of times can be increased to enable the receiving unit 600b to reliably receive the EIOS.

When the control signal generating and adding unit 520a completes generation of EIOS in the prescribed number of times, the physical layer control unit 700a issues instructions to generate and output an EI substitute signal following the last generated EIOS, and the control signal generating and adding unit 520a continues the generation and outputting of the EI substitute signal until it receives instructions to suspend them from the physical layer control unit 700a (step S205).

The EIOS outputted from the control signal generating and adding unit 520a is sent from the transmitting differential driver 550a and received by the differential receiver 610b of the PCIe port 410 (steps S206, S207).

Since the transmitting differential driver 550a continues to transmit the EI substitute signal after transmitting the EIOS, the physical layer control unit 700a then does not suspend the output of the transmitting differential driver 550a (steps S208, S209).

The state in which the EI substitute signal is continued to be transmitted is regarded as an EI substitute state into which the transmitting unit 500a turns (step S210).

The transmitting unit 500a which has transited to the EI substitute state continues to be in the EI substitute state until it receives data from the data link layer 340a or it receives instructions from the physical layer control unit 700a (step S211).

In contrast, the differential receiver 610b cannot detect that the transmitting unit 500a has turned into the EI substitute state because the output from the transmitting differential driver 550a continues.

The EIOS received by the differential receiver 610b is inputted into the control signal interpreting and deleting unit 640b via the serial-to-parallel converting unit 620b and the decoder 630b (step S212).

The control signal interpreting and deleting unit 640b notifies the physical layer control unit 700b of reception of such inputted EIOS into the control signal interpreting and deleting unit 640b. Upon receipt of the notification, the physical layer control unit 700b disables the output of the control signal interpreting and deleting unit 640b. Since the output is disabled, the control signal interpreting and deleting unit does not operate based on the EI substitute signal which is continued to be inputted during the EI substitute state (step S213).

Thereafter, the receiving unit 600b continues to be in the EI state until it receives EIEOS from the transmitting unit 500a (step S214).

In the transmitting unit 500a which is in the EI substitute state, if the transmitting data buffer receives a data signal, which is to be sent to the receiving unit 600b, from the data link layer 340, then recovery from the EI substitute state starts, and the control signal generating and adding unit 520a suspends the generating and outputting of the EI substitute signal and generates and outputs the EIEOS (steps S215 to S217).

After the control signal generating and adding unit 520a outputs the EIEOS, recovery from the EI substitute is implemented through an operation similar to that in the normal mode (steps S218 to S225).

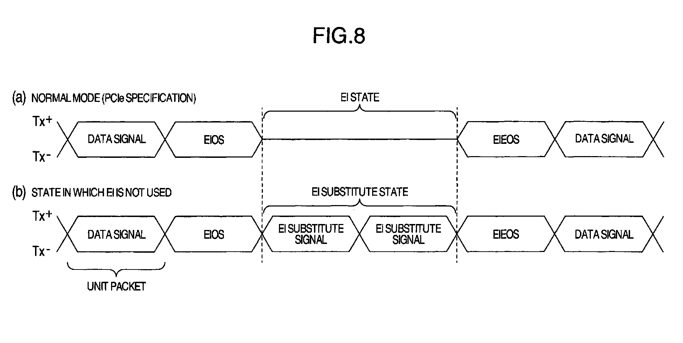

Next, a signal which the transmitting unit of the PCIe component transmits while it is in the EI state or in the EI substitute state will be described with reference to Fig. 8. Tx⁺ + and Tx⁻ appearing in the Fig. 8 represent a P pole and an N pole, respectively, of a differential signal output to be transmitted.

A part (a) in Fig. 8 shows a signal which the transmitting differential driver 550 transmits when the physical layer is in the normal mode and when the transmitting differential driver 550 is in the EI state. The normal mode is an operation that follows the PCIe specification. When transiting to the EI state, the transmitting unit 500 sends the EIOS immediately after the last data signal packet to be sent and immediately before the transition to the EI state, and the transmitting unit 500 turns into the EI state when the transmitting unit 500 completes sending the EIOS. When the transmission of the data signal is resumed, the transmission of a data signal packet starts after the EIEOS is sent.

A part (b) in Fig. 8 is a diagram showing a signal that the transmitting differential driver transmits when the physical layer is in the mode in which the EI is not used and when the transmitting differential driver is in the EI substitute state. Transiting to the EI state, the transmitting unit 500 transmits the EIOS in the same manner as when the physical layer is in the normal mode. The transmitting unit 500 that has been in the normal mode transits to the EI state after transmitting the EIOS. However, instead, it continues to transmit the EI substitute signal showing the EI state, and causes an electrical interface to continue to work, thus avoiding the transmitting unit 500 from being transited to the EI state. The transmission of the EI substitute signal is continued until the transmission of the data signal is restarted. The transmission of the data signal is restarted after the EIEOS is transmitted.

Here, the normal mode operates according to the PCIe specification and a transmission distance is limited. Therefore, the mode is useful when a shorter transmission distance, or a lower operating frequency are acceptable.

As explained above, by transmitting the EI substitute signal without transiting to the EI state, when transmitting the PCIe signal on the printed circuit board using a relay buffer such as a backplane, it becomes possible, without using a side band signal, to suppress the occurrence of random pattern signals which is caused by amplifying noise during the EI state, and to prevent the erroneous operation of the PCIe components,

Also, in the structure depicted in Fig. 1, it becomes possible to suppress the occurrence of random pattern signals caused by amplifying noise during the EI state, and to prevent the erroneous operation of the PCIe components, without using the side band signal, even when the root complex 300 and PCIe switch 400 are connected by a metal cable having a wiring for the PCIe interface instead of the backplane 120.

While the present embodiment has been described taking as an example the connection between the root complex and the PCIe switch, the present invention is not limited thereto. The PCIe transmission method according to the present invention is effective for connection between any PCIe components, including the connection between a PCIe switch and a PCIe switch.

### [Embodiment 2]

In Embodiment 2, an optical cable 150 is employed to connect between the server module 110 and the switch module 130 instead of the backplane 120 which is used in Embodiment 1.

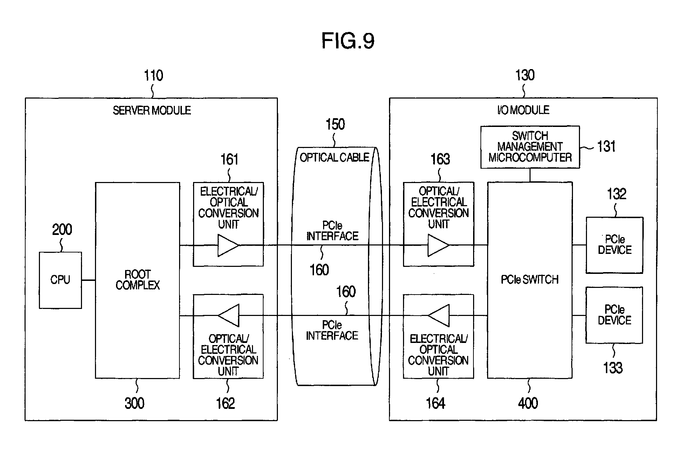

A computer system according to Embodiment 2 of the present invention will be described with reference to Fig. 9.

The computer system has a server module 110 and a switch module 130. The server module 110 is connected to the switch module 130 via electrical/optical conversion units 161, 164, optical/electrical conversion units 162, 163 and an optical cable 150. Other constructions are the same as those in Embodiment 1.

In the transmission of the PCIe signal over an optical cable, the PCIe port in a normal mode cannot perform normal operation in transmission. Therefore, the mode in which EI is not used is always employed for transmission.

As described in the above, the PCIe signal can be transmitted over an optical cable which operates in normal operations and the optical cable can transmit the PCIe signal for a longer distance than a metal cable. As a result, a server rack can be disposed more freely. In addition, space can be saved in wiring by employing the optical cable which is thinner and lighter than the metal cable.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. A computer system, comprising:
a first component (110) having a transmitting unit (500) which transmits a control signal,
a second component (130) having a receiving unit (600b) which receives the control signal,
a transmission path (120) which connects the first component (110) and the second component (130) along which a signal is transmitted and received, wherein:
in case of the transmitting unit (500) of the first component (110) transmits a ternary signal with three states of 0/1/Idle to the receiving unit of the second component (130),
the transmitting unit (500) of the first component (110) substitutes a combination of signals representing 0/1 for a signal representing the Idle state, and transmits the substituted signals instead of the ternary signal to the receiving unit of the second component (130).

2. The computer system according to claim 1, wherein:
the first component and the second component are PCIe components having PCIe ports,
the transmission path is a PCIe link,
the PCIe port of the first component has the transmitting unit for transmitting the control signal,
the PCIe port of the second component has the receiving unit for receiving the control signal, and
the Idle state is an Electrical Idle (EI) state.

3. The computer system according to claim 2, wherein:
when the first component transits to the Electrical Idle (EI) state,
the transmitting unit of the first component transmits an Electrical Idle Ordered Set (EIOS) signal to the receiving unit of the second component, and continues to transmit the EI substitute signal to the receiving unit of the second component.

4. The computer system according to claim 3, wherein:
when the first component recovers from the EI state,
the transmitting unit of the first component suspends transmission of the EI substitute signal to the receiving unit of the second component, and transmits an Electrical Idle Exit Ordered set (EIEOS) signal to the receiving unit of the second component.

5. The computer system according to claim 3, wherein:
the EI substitute signal is EIOS, and
when the transmitting unit of the first components has transited to the EI state, the transmitting unit of the first component continues to transmit the EIOS to the receiving unit of the second component.

6. The computer system according to claim 3, wherein:
the transmitting unit of the first component has a control signal generating unit (520) and a transmitting driver (550),
the control signal generating unit generates the EIOS signal and outputs the EIOS signal to the transmitting driver after the first component has transited to the EI state,
the control signal generating unit generates the EI substitute signal and continues to output the EI substitute signal to the transmitting driver after outputting the EIOS signal,
the control signal generating unit generates the EIEOS signal and outputs the EIEOS signal to the transmitting driver after the first component has recovered from the EI state, and
the transmitting driver outputs received various signals to the second component.

7. The computer system according to claim 3, wherein:
the PCIe port has a data link layer (340) and a physical layer (330),
the physical layer (330) of the PCIe port in the first component has a transmitting unit having the control signal generating unit and the transmitting driver as the transmitting unit of the first component, and
when the transmitting unit (500) of the physical layer receives a data signal from the data link layer of the PCIe port in the second component, the first component recovers from the EI state and suspends transmission of the IE substitute signal to the receiving unit of the second component.

8. The computer system according to claim 1, wherein:
the optical transmission path is an optical signal transmitting device and an optical cable for optical signal transmission.

9. The computer system according to claim 1, wherein:
the transmission path comprises a wiring or a metal cable on a printed board for transmitting electrical signals and a relay buffer for compensating waveform of PCIe signal.

10. A signal transmitting method for a computer system with a first component (110) having a PCIe port and a second component (130) having a PCIe port connected with each other by a transmission path along which a PCIe signal is transmitted and received, wherein the first PCIe port has a transmitting unit (500) for transmitting a control signal, and the second PCIe port has a receiving unit for receiving the control signal,
the method comprising the steps, performed at the transmitting unit of the first component, of:
when transmitting a signal from the first component to the second component (130), transmitting an Electrical Idle Ordered set (EIOS) signal to the receiving unit of the second component when the transmitting unit has transited to an Electrical Idle (EI) state,
continuing transmission of an EI substitute signal to the receiving unit of the second component,
suspending transmission of the EI substitute signal to the receiving unit of the second component when the transmitting unit of the first component has recovered from the EI state by receiving a data signal to be sent to the second component, and
transmitting an Electrical Idle Exit Ordered set (EIEOS) signal to the receiving unit of the second component.
